(19) Europäisches Patentamt / European Patent Office / Office européen des brevets

(11) **EP 4 718 329 A1**

(12) **EUROPEAN PATENT APPLICATION**

(43) Date of publication:
01.04.2026 Bulletin 2026/14

(21) Application number: 24203539.2

(22) Date of filing: 30.09.2024

(51) International Patent Classification (IPC):
$G06N\ 3/08^{(2023.01)}$    $G06N\ 3/0495^{(2023.01)}$
$G06N\ 3/09^{(2023.01)}$    $G06N\ 3/082^{(2023.01)}$
$G06N\ 3/084^{(2023.01)}$

(52) Cooperative Patent Classification (CPC):
G06N 3/084; G06N 3/0495; G06N 3/09

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: **Robert Bosch GmbH**
**70442 Stuttgart (DE)**

(72) Inventors:
• **Moshkovitz, Michal**
**Tel-Aviv (IL)**
• **Kozlovsky, Shir**
**8548000 Sede Avraham (IL)**
• **Di Castro, Dotan**
**3440619 Haifa (IL)**
• **Joglekar, Omkar**
**6492105 Tel Aviv-Yafo (IL)**
• **Tchuiev, Vladimir**
**3220614 Haifa (IL)**

Remarks:
Amended claims in accordance with Rule 137(2) EPC.

(54) **METHODS FOR TRAINING AND USING A NEURAL NETWORK ON AN EDGE DEVICE BY SELECTIVELY ADAPTING WEIGHTS ACCORDING TO THEIR CONTRIBUTION**

(57)    Methods are provided for training and using a neural network on an edge device of a communications network to perform classification. The neural network comprises layers and a plurality of binary or ternary weights, which are iteratively trained on a training data set comprising input samples and corresponding ground truth labels. The training comprises, during a forward pass, constructing contribution tensors being indicative of contributions of the weights of a layer towards an output of the layer; computing an output error of the neural network by comparing the output of a final layer to a ground truth label for an input sample; and during a backward pass, based on layer outputs obtained during the forward pass and the contribution tensors, identifying a set of weights which, when adapted, reduce the output error of the neural network, and adapting weights in that set to reduce the output error.

Fig. 3

## Description

### Field of the invention

The presently disclosed subject matter relates to a computer-implemented method for training a neural network on an edge device of a communications network to perform classification. The presently disclosed subject matter further relates to a computer-implemented method of using a neural network on an edge device of a communications network to perform classification. The presently disclosed subject matter further relates to a transitory or non-transitory computer-readable medium comprising data representing a computer program, the computer program comprising instructions for causing a processor system to perform one of the methods, and to a processor system comprising a memory and one or more processors, wherein the memory comprises instructions for causing the one or more processors to perform one of the methods.

### Background of the invention

Neural networks, in particular deep neural networks, form crucial components in many tasks, such as, e.g., image recognition, speech recognition and control systems. Although the deployment of neural networks takes place in many applications and devices, neural networks are generally trained exclusively in cloud servers and/or desktop computers. Training neural networks is generally computationally heavy and energy-intensive, and cloud servers and desktop computers generally have access to a substantial amount of power, compute and memory to perform such training. In addition, update protocols are generally high latency and requires a stable network connection.

Edge devices are computing devices which are generally located near the boundary of a network. Edge devices may be located within the network and near the boundary of the network, e.g., near a data source, and may serve as network endpoint. Such edge devices within the network may comprise edge routers, edge switches, and firewalls.

Edge devices may also be located outside of a network and near the boundary of the network, e.g., near a consumer and/or end-user. Edge devices may comprise end-user devices. Such examples of edge devices outside of the network may comprise smartphones, automated and autonomous vehicles, medical instruments and medical devices. Edge devices may control a data flow of data passing between networks, including the transmission, routing, processing, monitoring, filtering, and storage of the data. Edge devices are used in many real-time applications and Internet-of-things deployments, exemplified by the fact that there are already many times more edge devices than people on this planet, and more than two thirds of enterprise data are generated by edge devices.

Next to providing connectivity between networks, edge devices also provide additional beneficial services, including wireless capabilities, providing wireless clients with access to wired networks via, e.g. wireless access points; and security capabilities in, e.g., wireless access points and virtual private network servers. Due to the additional beneficial services provided by edge devices, it is desirable to perform inference tasks using neural networks on edge devices. In many applications, it is also desirable to train neural networks, especially deep neural networks, on edge devices. It may be desirable to train neural networks on edge devices, as training data may only be locally available, for example, for privacy and/or security reasons, as may be the case in, e.g., a medical setting. It may be preferred to not share training data with, e.g., a central server, e.g., a cloud server. It may be desirable to train neural networks, using the local training data, locally on edge devices. In addition, training neural networks on edge devices may allow the edge devices to operate in an autonomous manner, without requiring a central server, e.g., a cloud server, as a back-end infrastructure, and/or without requiring potentially unnecessary data communication back and forth, to, e.g., a central server.

However, edge devices may be limited in memory, compute power, and/or energy resources to execute the entire training of a neural network efficiently. Battery-operated edge devices may, for example, be equipped with limited battery capacity. In addition, due to limitations in memory, compute power, and/or energy resources of the edge device, inference of a neural network, e.g., a trained neural network, may be unsuitable to perform in real-time on an edge device.

Methods are known to improve the training of neural networks using quantization and/or discretization techniques of weights and/or activation functions. For example, Wang et al. (2023) BitNet: Scaling 1-bit Transformers for Large Language Models, retrievable from https://arxiv.org/abs/2310.11453, introduced BitNet, which is a transformer-based architecture that uses binary weights as neural network weights. Using a binary weight network (BWN), which may comprise a low-compute neural network, may save computational requirements, and/or may show improvements in energy consumption. In Ma et al. (2024) The Era of 1-bit LLMs: All Large Language Models are in 1.58 Bits, retrievable from https://arxiv.org/abs/2402.17764, a modification for BitNet is presented, using ternary weights as neural network weights instead. Using a ternary weight network (TWN), which may comprise a low-compute neural network, may save computational requirements, and/or may show performances comparable to, e.g., 16-bit transformers. These methods may reduce the precision of network weights at inference time, and may use techniques such as rounding, e.g., stochastic rounding and/or quantization to achieve such.

## Summary of the Invention

A disadvantage of the existing methods for training neural networks is, that they rely on the application of a gradient method, thereby generally requiring full gradient precision at training time. This renders the existing methods unsuitable to use for the purpose of training neural networks on edge devices, as edge devices may be limited in memory, compute power, and/or energy resources to achieve full gradient precision at training time, and/or execute the entire training of a neural network efficiently.

It would be advantageous to have an improved, gradient-free training method of neural networks on edge devices.

In accordance with a first aspect of the invention, as defined by claim 1, a computer-implemented method is provided for training a neural network on an edge device of a communications network to perform classification. In accordance with a further aspect of the invention, as claimed by claim 13, a computer-implemented method is provided for using a neural network on an edge device of a communications network to perform classification. In accordance with a further aspect of the invention, a transitory or non-transitory computer-readable medium is provided as defined by claim 14, comprising data representing a computer program, the computer program comprising instructions for causing a processor system to perform any of the methods described in this specification. In accordance with a further aspect of the invention, a processor system is provided as defined by claim 15, comprising a memory and one or more processors, wherein the memory comprises instructions for causing the one or more processors to perform any of the methods described in this specification.

The above measures may involve training a neural network on an edge device of a communications network to perform classification, wherein the neural network comprises one or more layers, and each of the one or more layers comprises a plurality of weights, wherein the weights are binary or ternary weights.

The edge device may comprise a computing device which is located near the boundary of the communications network, such as at a location near a data source of the communications network, and/or near a consumer of the communications network. The edge device may serve as an endpoint of the communications network. The edge device may be configured to control a data flow of data passing through the communications network, and/or between the communications network and a second communications network. The edge device may be configured to receive, send, transmit, route, process, monitor, filter, and/or store data of the data flow. The edge device may comprise, for example, an edge router, an edge switch, a firewall, a smartphone, an automated and/or autonomous vehicle, an access point, such as a wireless access point, a virtual private network (VPN) server, a medical device, and/or a medical instrument. The communications network may be a wired or a wireless network, or a combination thereof. The neural network may be a deep neural network. The classification task may comprise one or more tasks such as tasks in image recognition, speech recognition, chat bots, games, algorithmic trading and/or control systems. For example, the classification tasks may comprise a classification of data, e.g., of data of the data flow of the communications network. The classification task may comprise, for example, a classification of transmitted data which the edge device may have transmitted, a classification of routed data which the edge device may have routed, and/or a classification of received data which the edge device may have received. The classification task may comprise a classification of the data in the data flow which the edge device may process and/or monitor. For example, the classification may be used in a monitoring process which comprises a decision-making process. The decision-making process may at least partly be based on the classification of the data.

In standard neural network training, which generally comprises the use of a full-precision weight network (FPWN), the weight matrix is continuous, meaning that the network weights comprise real numbers. The above measures may involve network weights which are binary or ternary weights, meaning that the corresponding weight matrices may comprise only binary values in {-1, +1}, or ternary values in {-1, 0, +1}, and the corresponding training methods comprise the usage of a binary weight network (BWN) or a ternary weight network (TWN). The BWN or TWN may arise from a FPWN, following a discretization and/or quantization process, through which the FPWN is discretized and/or quantized into the BWN or TWN. The weights of the BWN or TWN may be determined by quantizing and/or discretizing the FPWN. The above measures may further involve determining the weights of the neural network by quantizing and/or discretizing a further neural network. The further neural network may comprise a FPWN. The FPWN may comprise further weights. The further weights may comprise non-binary or non-ternary weights.

The above measures may further involve iteratively training the weights on a training data set, wherein the training data set comprises a plurality of input samples and ground truth labels for the plurality of input samples. The training data set may comprise a labelled data set. The data may comprise images, for example, training images and/or testing images, which may be categorized and/or classified in a number of possible classes. The plurality of input samples may comprise a plurality of data points. The plurality of samples may comprise a plurality of vectors. The vectors may comprise a plurality of features, wherein the features may be determined by the neural network by classification. During the training, one or more batches may be sampled from the plurality of input samples. The one or more batches may be of a same size. The plurality of ground truth labels may be of the same number as the plurality of input samples. The plurality of ground truth labels may comprise real values of the same dimension as outputs of the neural network.

The training may comprise, for an input sample, a forward pass. During the forward pass, contribution tensors may be constructed for each layer. The contribution tensors may be indicative of contributions of the plurality of weights of a respective layer towards an output of the layer. By the construction of contribution tensors, weights, activations, such as via activation functions, gradients and/or inputs may be quantized to each layer, for example, a hidden layer. Gradient computations may be replaced by the computations of the contribution tensors, which may be low-precision contribution tensors.

The above measures may further involve computing an output error of the neural network by comparing the output of a final layer of the neural network to a ground truth label for the input sample. Computing the output error may take place after the forward pass. Computing the output error may comprise taking the difference between the ground truth label corresponding to the input sample and the output of the final layer of the neural network.

The above measures may further involve a backward pass. During the backward pass, for each layer, a set of weights may be identified. The set of weights may be identified based on layer outputs obtained during the forward pass, and/or based on the contribution tensors. The set of weights may comprise weights, which, when the weights may be adapted, may reduce the output error of the neural network. During the backward pass, for each layer, one or more weights in the set of identified weights may be adapted. One or more weights in the set of identified weights may be adapted to reduce the output error. For example, one or more weights in the set of identified weights may be adapted by one or more of being flipped, being decreased and/or being increased.

As the contribution tensors may be indicative of contributions of the plurality of weights of a respective layer towards the output of the layer, the contribution tensors may as well measure how many erroneous contributions towards the computation of a given output, such as an expected classification, a particular weight may cause. The contribution indicated by the contribution tensors may then determine whether a respective weight corresponding to the contribution may need to be adapted: for example, being flipped, such as in the case of a binary weight, or being increased or decreased, such as in the case of a ternary weight. In standard neural network training, a backward pass may rely on the underlying application of gradient methods, such as Stochastic Gradient Descent (SGD), and thus be gradient-dependent. In the backward pass according to the invention, there is no dependence on gradients, enabling a gradient-free neural network training method. Furthermore, as the above measures may enable that not all weights be adapted and updated in each backward pass, which gradient-based methods generally require, the above measures typically save computation costs in the weight updates. In addition, in the adapting of the weights, which are binary or ternary, the above measures may enable the use of bit-wise operations and low-precision integer operations, where existing techniques generally need full-precision computations, such as in high-precision backward passes, throughout training and inference methods. The technique according to the above measures, comprising bit-wise operations and low-precision integer operations on the neural network weights of the BWN or TWN, typically consumes less compute power and memory.

The above measures are at least in part based on the insight that a neural network of BWN- or TWN-type may be trained without the need for computations of gradients, where existing methods partly or wholly train networks with the use of high-precision gradients, which is costly in power and memory and inefficient to run on edge devices which are generally battery-limited. The above measures may enable a training process in which all the weights comprise one or two bits, wherein the training process does not need to make use of any hidden full-precision computations. By identifying the set of weights, which, when adapted reduce the output error of the neural network, and thereby contribute in an erroneous manner towards an expected classification, and adapting relevant weights from the identified set of weights to reduce the output error, the above measures may enable the training of models, such as neural network models, without the need for gradient-based optimization techniques. This may enable a performance on the edge device which is comparable to gradient-based baselines, using a fraction of compute power, memory and/or energy in compressing neural networks to a BWN or TWN for training and/or inference. A training method according to the above measures may thereby optionally cause only minimal performance degradation compared to standard training methods, which generally comprise full-precision, gradient-based techniques.

In an embodiment, for a current layer of the neural network, a contribution tensor may, for example, be constructed based on the plurality of weights of the current layer and on an output of a previous layer. For example, constructing the contribution tensor may comprise computing the contribution tensor by a matrix multiplication of a weight matrix comprising the plurality of weights of the layer and a further matrix comprising the output of the previous layer. The constructed contribution tensors may then signify contributions of the plurality of weights of the current layer towards an output of the current layer. The computed contribution tensors, which may be low-precision contribution tensors, may replace gradient computations in a backward pass, where standard neural network training methods require gradient computations.

In an embodiment, across a plurality of backward passes, for each identified weight, a number of occurrences may be tracked that a respective weight was identified to need to be adapted to reduce the output error. The number of occurrences may be taken from each sample in a batch. For example, during the backward pass, weights in the set of identified weights are adapted using a probability which is proportional to the tracked numbers of occurrences. In an embodiment, during the backward pass, a subset of the set of identified weights may be identified. The subset may comprise the identified weights of which the respective numbers of occurrences are higher than the numbers of occurrences of the identified weights not belonging to the subset. Another option may be, that the subset may comprise the identified weights of which the respective numbers of occurrences exceed a given threshold. The weights in the identified subset may be adapted using a given probability.

For example, in the base of a binary network, a set of weights may be identified on the basis of indices of contributions, for example, entries in the contribution tensors. The indices may be indices which correspond to positive and/or to negative contributions, for example, positive and/or negative entries in the contribution tensor. The set of weights may be identified on the basis of whether some negative contributions would need to be adapted, and/or whether some positive contributions needed to be adapted, for example, if layer outputs needed to have a different sign, in order to reduce the output error of the neural network. For example, the adapting of weights in the set of identified weights may comprise the performing of one or more of a flipping, a decreasing and/or an increasing of the weights. In the case of a binary weight network, a weight may be flipped, e.g., from -1 to 1 or from 1 to -1. In the case of a ternary weight network, a weight may be decreased, e.g., from 1 to 0 and/or from 0 to -1, or increased, e.g., from 0 to 1 and/or from -1 to 0. This way, relevant bits, which, when adapted, may reduce the output error of the neural network, may be adapted using bit-wise and/or logical operations. As there is no dependence on gradients in the backward pass according to the above measures, a gradient-free neural network training method is enabled. Furthermore, as the above measures may enable that not all weights be adapted and updated in each backward pass, but only weights in a set of identified weights, the above measures typically save computation costs in the weight updates. In addition, in the adapting of the weights, which are binary or ternary, the above measures may enable the use of bit-wise operations and low-precision integer operations, where existing techniques generally need full-precision computations, such as in high-precision backward passes.

The above measures may enable a training method of gradient-free type which combines stochastic information with heuristic information in order to perform the training. An optimal way of adapting the weights in a consistent way with as many samples, e.g., as many samples in the plurality of input samples may be found using discrete optimization techniques. A combinatorial problem of identifying which weights to be adapted generally scales exponentially with respect to different parameters. By introducing a variable aggregating the number of occurrences that a weight would need to be adapted in order to reduce the output error of the neural network, the scaling of the combinatorial problem may be reduced. Thereby, gradient-independent learning rules for neural networks may be formulated. Furthermore, the size of the subset of the set of identified weights, and/or the threshold for the numbers of occurrences as variables, may be used for other purposes, such as to perform optimization and/or scheduling.

A trained neural network may be provided for deployment on the edge device. The trained neural network may have been trained according to a training method according to the above measures. The trained neural network may have been trained on the edge device itself. The trained neural network may be used on the edge device for classification. The trained neural network may be provided for deployment on the edge device after a plurality of backward passes, e.g., a number of 0(1000) backward passes, performed during the training. During the backward passes, current weights in the neural network may have led to an output error. Through contribution tensors which have been constructed in a forward pass, the output error can be led back to individual contributions of current weights in the neural network. By adjusting the weights in the neural network during the backward passes, the contribution of a weight in the neural network to the output error may be reduced, wherein the overall output error may be reduced as well. The trained neural network which may be provided may comprise the adjusted weights.

In a further aspect of the invention, a method may be provided for using a neural network on an edge device of a communications network to perform classification. The neural network may have been a trained neural network. The neural network may have been trained on an edge device. The edge device on which the neural network has been trained and the edge device on which the trained neural network is used may be the same edge device. The neural network may have been trained using a training method according to an embodiment described in this specification. This way, the invention enables both training and inference on the edge device. The classification task may, for example, comprise a classification of data, e.g., of data of the data flow of the communications network, which may be monitored by the edge device. The classification task may comprise, for example, a classification of transmitted data which the edge device may have transmitted through the communications network, a classification of routed data which the edge device may have routed through the communications network, and/or a classification of received data which the edge device may have received in the communications network. The classification task may comprise a classification of the data in the data flow which the edge device may process and/or monitor in the communications network. For example, the classification may be used in a monitoring process which comprises a decision-making process. The decision-making process may at least partly be based on the classification of the data.

In a further aspect of the invention, a system is provided, which comprises one or more processors, and one or more storage devices storing instructions that, when executed by the one or more processors, cause the one or more processors to perform operations for a method according to an embodiment as discussed above.

In a further aspect of the invention, a transitory or non-transitory computer-readable medium is provided, which comprises data representing instructions, which when executed by a processor system, cause the processor system to perform one or more steps of the method according to an embodiment as discussed above.

It will be appreciated by those skilled in the art that two or more of the above-mentioned embodiments, implementations, and/or optional aspects of the invention may be combined in any way deemed useful.

Modifications and variations of any device, system, network, computer-implemented method and/or any computer readable medium, which correspond to the described modifications and variations of another of such entities, can be carried out by a person skilled in the art on the basis of the present description.

## Brief description of the drawings

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,

**Fig. 1a** schematically shows an embodiment of an edge device;

**Fig. 1b** schematically shows an example of an edge device in a communications network according to an embodiment;

**Fig.2** schematically shows an example of a flow of a training scheme of a neural network on an edge device according to an embodiment;

**Fig. 3** schematically shows an embodiment of a method for training a neural network on an edge device;

**Fig. 4** schematically shows an embodiment of a method for using a neural network on an edge device;

**Fig. 5a** schematically shows a computer-readable medium having a writable part comprising a computer program according to an embodiment; and

**Fig. 5b** schematically shows a representation of a processor system according to an embodiment.

## Reference signs list

The following list of references and abbreviations is provided for facilitating the interpretation of the drawings and shall not be construed as limiting the claims.

| | |
|---|---|
| 20 | ground truth labels |
| 21 | input samples |
| 22, 23, 24 | samples |
| 31, 32, 33 | weights of neural network |
| 41, 42 | backward propagated error of neural network layers |
| 100, 100' | communications network |
| 101, 101' | device in a communications network |
| 102, 102' | device in a communications network |
| 103, 103' | device in a communications network |
| 110 | edge device |
| 111 | processor system |
| 112 | memory |
| 113 | communication interface |
| 172, 172' | cloud storage system |
| 200 | neural network |
| 201 | forward pass |
| 202 | backward pass |
| 211, 212, 213 | layers of neural network |
| 221, 222 | backward activation pass blocks |
| 231 | training data set |

214, 242, 243, 244    batches

300    method for training a neural network on an edge device
301    iteratively training the weights on a training data set
302    providing the trained neural network for deployment on the edge device
310    forward pass
311    constructing contribution tensors for each layer
312    computing an output error of the neural network
320    backward pass
321    identifying a set of weights which, when adapted, reduce the output error of the neural network
322    adapting weights in the set of identified weights

400    method for using a neural network on an edge device
401    using a trained neural network on an edge device

1000    optical storage device
1001    memory card
1020, 1021    stored data

1110    subsystems or components
1120    processing subsystem
1122    memory
1124    dedicated integrated circuit
1126    communication interface
1130    interconnect
1140    processor system

## Detailed description of embodiments

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

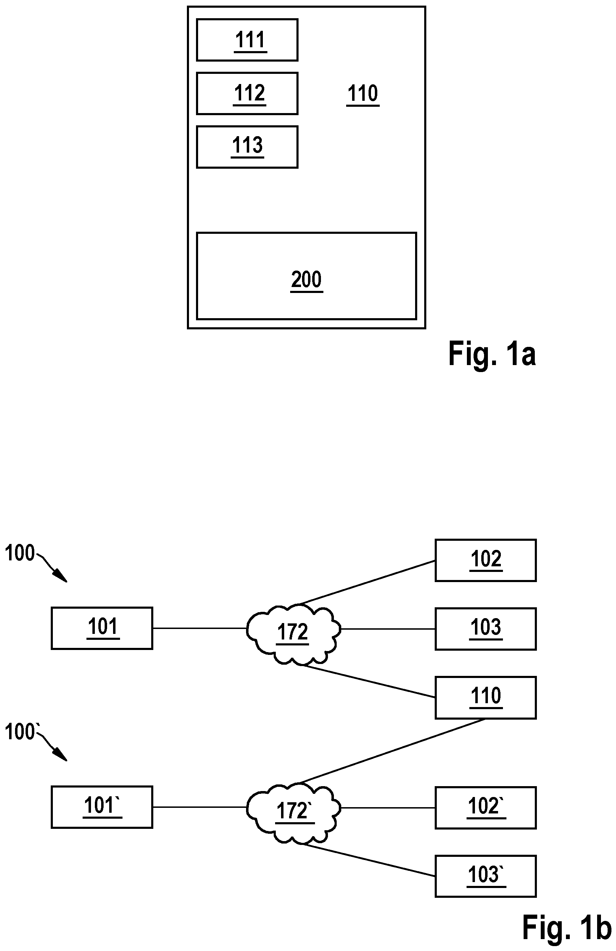

**Fig. 1a** schematically shows an embodiment of an edge device 110. A neural network 200 may be comprised in edge device 110. Neural network 200 may be trained on edge device 110. Neural network 200 may be used on edge device 110. Neural network 200 may be trained on edge device 110 to be performed on edge device 110. Edge device 110 may comprise a processor system 111 and a memory 112, and a communication interface 113. Memory 112 may store instructions that, when executed by processor system 111, cause processor system 111 to perform operations for executing a method 300, 400. Edge device 110 may comprise communication interface 113, e.g., to communicate with, e.g., other devices 101, 102, 103 in, e.g., a communication network 100. Communication interface 113 may be selected from various alternatives. For example, the interface 113 may be a network interface to a local or wide area network, e.g., the Internet, a storage interface to an internal or external data storage, an application interface (API), etc. Memory 112 may comprise a storage, e.g., electronic storage, magnetic storage, etc. The storage may comprise local storage, e.g., a local hard drive or electronic memory. The storage may comprise non-local storage, e.g., cloud storage. In the latter case, the storage may comprise a storage interface to the non-local storage. The storage may comprise multiple discrete sub-storages together making up memory 112. The storage may comprise non-transitory storage. For example, the storage may store data in the presence of power such as a volatile memory device, e.g., a Random Access Memory (RAM). For example, memory 112 may store data in the presence of power as well as outside the presence of power such as a non-volatile memory device, e.g., Flash memory. Memory 112 may comprise a non-volatile non-writable part, e.g., ROM, e.g., storing part of the software. The execution of edge device 110 may be implemented in processor system 111. Edge device 110 may comprise functional units to implement aspects of embodiments. The functional units may be part of the processor system. For example, functional units shown herein may be wholly or partially implemented in computer instructions that are stored in a storage of the device and executable by the processor system. The processor system may comprise one or more processor circuits, e.g., microprocessors, CPUs, GPUs, etc. Edge device 110 may comprise multiple processors. A processor circuit may be implemented in a distributed fashion, e.g., as multiple sub-processor circuits. For example, edge device 110 may use cloud computing. Edge device 110 may comprise a microprocessor which executes appropriate software stored at the device; for example, that software may have been downloaded and/or stored in a corresponding memory, e.g., a volatile memory such as RAM or a non-volatile memory such as Flash. Instead of using software to implement a function, edge device 110 may, in whole or in part, be implemented in programmable logic, e.g., as field-programmable gate array (FPGA). The device may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc. In particular, edge device 110 may comprise circuits, e.g., for cryptographic processing, and/or arithmetic processing. In hybrid embodiments, functional units are implemented partially in hardware, e.g., as coprocessors, and partially in software stored and executed on the device.

**Fig. 1b** schematically shows an example of an edge device 110 as part of a communications network 100 according to an embodiment. Edge device 110 may comprise a computing device. Edge device 110 may comprise a computing device which is located near the boundary of communications network 100, such as at a location near a data source of communications network 100, and/or near a consumer of the communications network 100. Edge device 110 may serve as an endpoint of communications network 100. Edge device 110 may be configured to control a data flow of data passing through communications network 100, and/or between communications network 100 and a second communications network 100'. Edge device 110 may be configured to receive, send, transmit, route, process, monitor, filter, and/or store data of the data flow. Edge device 110 may comprise, for example, an edge router, an edge switch, a firewall, a smartphone, an automated and/or autonomous vehicle, an access point, such as a wireless access point, a virtual private network (VPN) server, a medical device, and/or a medical instrument. 'Communications network 100 may be a wired or a wireless network, or a combination thereof. Neural network 200 may be a deep neural network. Edge device 110 may be configured to perform a classification task. Neural network 200 may be trained and/or used on edge device 110 to perform a classification task. The classification task may comprise one or more tasks such as tasks in image recognition, speech recognition, chat bots, games, algorithmic trading and/or control systems. For example, the classification task may comprise a classification of data, e.g., of data of the data flow of communications network 100. The classification task may comprise, for example, a classification of transmitted data which edge device 110 may have transmitted, a classification of routed data which edge device 110 may have routed, and/or a classification of received data which edge device 110 may have received. The classification task may comprise a classification of the data in the data flow which edge device 110 may process and/or monitor. For example, the classification may be used in a monitoring process which comprises a decision-making process. The decision-making process may at least partly be based on the classification of the data. Edge device 110 may receive data via communication interface 113. Edge device 110 may receive data to classify and/or to perform a classification task on via communication interface 113. The data may be received from an input device, which may be located inside or outside the communications network 100. Edge device 110 may output a classification. Edge device 110 may send the classification via communication interface 113. Edge device 100 may send the classification to an output device, which may be located inside or outside the communications network 100. Edge device 110 may be configured to connect to communications network 100 and/or 100' via communication interface 113. Edge device 110 may communicate with other devices 101, 102, 103, 101', 102', 103', input devices, output devices, and/or one or more sensors over a communications network 100 and/or 100'. Communications network 100, 100' may be a computer network. The computer network may be an internet, an intranet, a LAN, a WLAN, etc. The computer network may be the Internet. The communications network 100, 100' may be wholly or partly wired, and/or wholly or partly wireless. Communication interface 113 may be arranged to communicate within edge device 110 or outside of edge device 110 as needed. For example, communication interface 113 may comprise a connector, e.g., a wired connector, e.g., an Ethernet connector, an optical connector, etc., or a wireless connector, e.g., an antenna, e.g., a Wi-Fi, ZigBee, a cellular antenna, a 4G or 5G antenna. Edge device 110 may communicate via communication interface 113, which is configured to communicate with other devices 101, 102, 103, 101', 102', 103' and/or communication networks 100, 100'. Communication interface 113 may be used to send or receive data, e.g., images, sensor data, etc., and/or classifications of data. Edge device 110 may be connected to one or more cloud storage systems 172, 172', to which multiple devices 101, 102, 103, 101', 102', 103' in communications networks 100, 100' may be connected as well. This may illustrate an option of uploading, storing, sharing and downloading data.

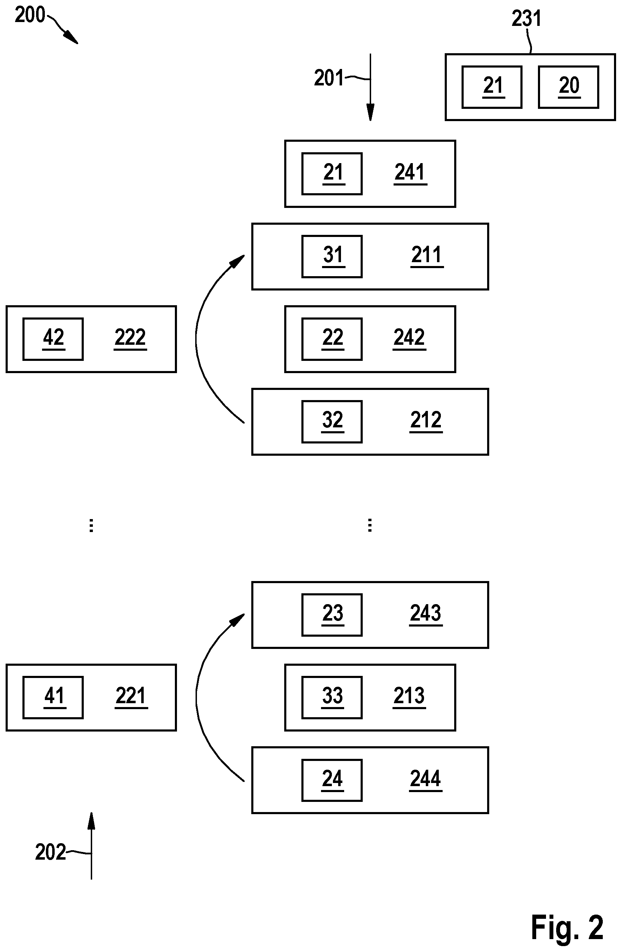

**Fig.2** schematically shows an example of a flow of a training scheme of a neural network 200 on an edge device 110 according to an embodiment.

Methods are known to improve the training of neural networks using quantization and/or discretization techniques of weights as the neural network weights and/or activation functions. Han et al. (2015) Deep Compression: Compressing Deep Neural Networks with Pruning, Trained Quantization and Huffman Coding, retrievable from https://arxiv.org/abs/1510.00149, Iandola et al. (2016) SqueezeNet: AlexNet-level accuracy with 50x fewer parameters and <0.5MB model size, retrievable from https://arxiv.org/abs/1602.07360, and Han et al. (2015) Learning both Weights and Connections for Efficient Neural Networks, retrievable from https://arxiv.org/abs/1506.02626, use techniques which accelerate computation by reducing the network parameters and connections. However, the techniques still require full precision multiplications and accumulations when training the network. Other methods, such as Lin et al. (2016) Neural Networks with Few Multiplications, retrievable from https://arxiv.org/abs/1510.03009, Courbariaux et al. (2016) BinaryConnect: Training Deep Neural Networks with binary weights during propagations, retrievable from https://arxiv.org/abs/1511.00363, and Li et al. (2022) Ternary Weight Networks, retrievable from https://arxiv.org/abs/1605.04711, replace the original computations by only accumulations or even binary logic operations: in particular, through discretization and/or quantization of the network weights and/or activation functions. In particular, binary weight networks (BWN) constrain the neural network weights to the binary space, so to the values {-1, +1}, while ternary weight networks (TWN) constrain the neural network weights to the ternary space, so to the values {-1, 0, +1}. These methods discretize only the weight matrices within a network, thereby removing the need for multiplication operations. Techniques such as in Rastegari et al. (2016) XNOR-Net: ImageNet Classification Using Binary Convolutional Neural Networks, retrievable from https://arxiv.org/abs/1603.05279, and Deng et al. (2018) GXNOR-Net: Training deep neural networks with ternary weights and activations without full-precision memory under a unified discretization framework, retrievable from https://arxiv.org/abs/1705.09283, introduce XNOR and gated XNOR (GXNOR) networks, wherein both the network weights and activation functions are restricted to the binary space, thereby replacing multiply-accumulate operations with binary logic operations. These techniques show comparable performance to state-of-the-art full-precision methods using a fraction of the memory and compute requirements. Furthermore, as discussed above, Wang et al. (2023) BitNet: Scaling 1-bit Transformers for Large Language Models, retrievable from https://arxiv.org/abs/2310.11453, introduced BitNet, which is a transformer-based architecture that uses binary weights as neural network weights, showing improvements in energy consumption. In Ma et al. (2024) The Era of 1-bit LLMs: All Large Language Models are in 1.58 Bits, retrievable from https://arxiv.org/abs/2402.17764, a modification for BitNet is presented, using ternary weights as neural network weights instead, performing almost as well as 16-bit transformers. The discussed methods may save computational requirements and energy by reducing the precision of network weights at inference time and using techniques such as stochastic rounding and/or quantization. The discussed methods for training neural networks, however, rely on the application of gradient methods, and therefore may require full gradient precision at training time.

In the following, a training scheme of a neural network 200 on an edge device 110 according to an embodiment will be outlined which is gradient-free. Notation may be introduced which generally is adapted to tensor form, as is customary in, e.g., classic problems in feature-based supervised machine learning, implementations in frameworks such as, e.g., in PyTorch, and due to space constraints. The objects are not typically restricted to tensor objects.

Neural network 200 may comprise one or more layers 211, 212, 213, say $L$ layers. Training data set 231 may comprise the training data set comprises a plurality of input samples 21 and ground truth labels 20 for the plurality of input samples 21. The plurality of input samples 21 may be a labelled data set 21. The plurality of input samples 21 may comprise a plurality of data points 21, 22, 23, 23, 24, say $N$ data points. The labelled data set 21 may be denoted by $D = \{x_1, \ldots, x_N\}$. The plurality of input samples 21 may comprise a plurality of samples 21, 22, 23, 24, which may be denoted by $x_n$, where $n = 1, \ldots, N$. The plurality of samples 21, 22, 23, 24 may comprise a plurality of vectors $x_n$, the vectors comprising a plurality of features, say $d_0$ features, which may be real numbers, which may be expressed as $x_n = \begin{bmatrix} x_{n,0}, \ldots x_{n,d_0-1} \end{bmatrix} \in \mathbb{R}^{d_0}$. During the training, one or more batches 241, 242, 243, 244 may be sampled from the plurality of input samples 21, say from $D$. The one or more batches 241, 242, 243, 244 may be of a same size, say $B$, and may be denoted by $X_b$, where $b = 1, B$. The plurality of ground truth labels 20 may be of the same number as the plurality of input samples 21, say $N$. The plurality of ground truth labels 20 may comprise real values of the same dimension as outputs of the neural network, say $d_L$, and may be denoted by $y_1, \ldots y_N \in \mathbb{R}^{d_L}$. In what follows, notation may be consistent, wherein subscripts may refer to sample indices, and superscripts may denote layer indices.

Each of the one or more layers 211, 212, 213 of neural network 200 may comprise a plurality of weights 31, 32, 33. The weights 31, 32, 33 may be comprised in parameter matrices, such as weight matrices, which may be denoted by $W^1, \ldots, W^L$, where $W^l \in \mathbb{R}^{d_{l-1} \times d_l}$ for $l = 1, \ldots, L$. For networks of FPWN-type, weight matrices are generally continuous, which means that $W^l \in \mathbb{R}^{d_{l-1} \times d_l}$. However, here networks of BWN-type or TWN-type are considered, which means that $W^l \in \{-1,1\}^{d_{l-1} \times d_l}$ or $W^l \in \{-1,0,1\}^{d_{l-1} \times d_l}$. In this matrix formulation, a main objective may be formulated as how to learn the parameter weight matrices. For a standard loss function, which may be denoted by $\ell(\cdot,\cdot): \mathbb{R}^{d_L} \times \mathbb{R}^{d_L} \to \mathbb{R}^+$, the objective may be phrased as how to minimize the average error over the data set D:

$$\mathcal{L} = \frac{1}{N} \sum_{n=1}^{N} \ell\left(y_n, x_n^{(L)}\right)$$

A forward pass 201 of the neural network 200 may comprise for each of the one or more layers 211, 212, 213 a linear layer forward pass, which may be denoted by

$$v_b^{(l)} = X_b^{(l-1)} \cdot W^{(l)}, \quad l = 1, \dots, L,$$

and/or an activation layer forward pass, which may be denoted by

$$X_b^{(l)} = \sigma^{(l)}\left(v_b^{(l)}\right), \quad l = 1, \dots, L$$

Here, $v_b^{(l)} \in \mathbb{R}^{B \times d_l}$, and $\sigma^{(l)}(\cdot): \mathbb{R}^{d_l} \to \mathbb{R}^{d_l}$ may denote the activation function of the *l*'th layer, The activation function may operate on each entry and each batch sample separately. In addition, $X_b^{(l)} \in \mathbb{R}^{B \times d_l}$ may represent an intermediate vector. The intermediate vectors may be batches of size *B* and outputs of dimension $d_l$ for layer *l*.

An output error of the neural network 200, which may be denoted by $\mathcal{L}_b$ with respect to batch *b*, may be computed by comparing the output $X_b^{(L)}$ of a final layer 213 of the neural network 200 to a ground truth label $y_b$ 20 for the input sample 21. Computing the output error may take place after the forward pass 201. Computing the output error $\mathcal{L}_b$ may comprise taking the difference between the ground truth label $y_b$ 20 corresponding to the input sample 21 and the output $X_b^{(L)}$ of the final layer 213 of the neural network 200. In standard, existing backpropagation algorithms, backward propagated errors 41, 42 may be denoted by $\delta^{(l)} \in \mathbb{R}^{B \times d_l}$ in batch form. Here, the gradient of the network error $\mathcal{L}_b$ with respect to the output $X_b^{(L)}$ of the final layer 213 of the neural network 200 may be denoted by $e_b = \partial \mathcal{L}_b / \partial X_b^{(L)}$. The network error is then computed as $e_b = y_b - X_b^{(L)}$, $\mathcal{L}_b = Tr(e_b^\top \cdot e_b)$, and the back-propagated error 221 corresponding to the final layer $\delta^{(L)}$ is computed as $\delta^{(L)} = e_b \odot \sigma^{(L)\prime}(v^{(L)})$, with Q denoting the standard Hadamard product. Then, in a backward pass 202, for *l = L, ...,1* the gradient of the weight matrices is computed as $\nabla W^{(l)} = X_b^{(l-1),\top} \delta^{(l)}$, where $W^{(l)} \in \mathbb{R}^{d_{l-1} \times B} \times \mathbb{R}^{B \times d_l}$, and via a gradient descent $W^{(l)} = W^{(l)} - \alpha \nabla W^{(l)}$ the next backpropagated error is computed as $\delta^{(l-1)} = \sigma\prime(v^{(l-1)}) \odot [\delta^{(l)} \cdot W^{(l),\top}] \in \mathbb{R}^{d_{l-1} \times B} \times \mathbb{R}^{B \times d_l}$. Note how the existing backpropagation techniques discussed here depend on gradients, especially in the gradient descent.

In the following, the structure of a single layer 211, 212, 213, in a neural network 200 according to the invention will be outlined, and a no-gradient optimization technique is presented as opposed to the existing techniques.

The training may comprise, for an input sample 21, a forward pass 201. During the forward pass 201, contribution tensors may be constructed for each layer 211, 212, 213. A contribution tensor, which may be denoted by $C^{(l)} \in \mathbb{R}^{B \times d_{l-1} \times d_l}$, may serve as an intermediate tensor. A contribution tensor may signify contributions of objects towards the final estimation. The contribution tensors may be indicative of contributions of data points, features, such as input features and/or output features, and/or the plurality of weights 31, 32, 33 of a respective layer 211, 212, 213 towards an output of the layer 211, 212, 213. For a current layer 211, 212, 213 of the neural network 200, a contribution tensor may be constructed based on the plurality of weights 31, 32, 33 of the current layer 211, 212, 213 and on an output of a previous layer 211, 212, 213. In an embodiment, constructing the contribution tensor may comprise computing the contribution tensor by a matrix multiplication of a weight matrix comprising the plurality of weights 31, 32, 33 of the layer 211, 212, 213 and a further matrix comprising the output of the previous layer 211, 212, 213. The elements $c_{bio}^{(l)}$ of $C^{(l)}$ may be defined and denoted by

$$c_{bio}^{(l)} = x_{bi}^{(l-1)} \cdot w_{io}^{(l)},$$

*b* = 1, ... , *B*, *i* = 1, ... , $d_{l-1}$, *o* = 1, ... , $d_l$.

Here, $x_{bi}^{(l-1)}$ may be an element of the batch matrix $X_b^{(l-1)}$ corresponding to a batch 241, 242, 243, 244, and

$w_{io}^{(l)}$ may be an element in the weight matrix $W^{(l)}$. Then, $c_{bio}^{(l)}$ may represent the contribution of the $i$'th feature of the $b$'th data point with the weight matrix towards the o'th output in the $l$'th layer 211, 212, 213 of the network 200. Note that, for example, $w_{io}^{(l)} \in \{-1,1\}$ in the BWN case, and $x_{bi}^{(l-1)}$ may be in, e.g., {-1,1}, or $\mathbb{Z}$, or $\mathbb{R}$ ; this may depend on the network precision. Further, note that if the tensor $C^{(l)}$ is summed along the input dimension, the matrix $v^{(l)}$ may be recovered:

$$v_{bo}^{(l)} = \sum_{i=1}^{d_{l-1}} c_{bio}^{(l)} = \sum_{i=1}^{d_{l-1}} x_{bi}^{(l-1)} \cdot w_{io}^{(l)} \, ,$$

$b = 1, \dots , B, o = 1, \dots , d_l$.

In the following, the BWN case may be considered, without loss of generality. Furthermore, without loss of generality, in the BWN case, an activation function is considered which returns positive values for $v > 0$ and otherwise non-positive values. Such activation functions comprise, for example, the sign activation function *sign(v)*, the ReLU activation function *ReLU(v)*, and the leaky ReLU activation function *LeakyReLU(v)*, and/or any combination thereof.

During a backward pass 202, for each layer 211, 212, 213, based on layer outputs obtained during the forward pass 201 and the contribution tensors, a set of weights 31, 32, 33 may be identified, which, when adapted, reduce the output error of the neural network 200. For example, a set of weights 31, 32, 33 may be identified on the basis of indices of contributions, for example, entries in the contribution tensors. The indices may be indices which correspond to positive and/or to negative contributions, for example, positive and/or negative entries in the contribution tensor. The positive and negative indices of contributions in $v_{bo}^{(l)} = \sum_{i=1}^{d_{l-1}} c_{bio}^{(l)}$ may be denoted by

$$CP_{bo}^{(l)} = \left\{ i \,\middle|\, c_{bio}^{(l)} > 0 \right\}, \qquad CN_{bo}^{(l)} = \left\{ i \,\middle|\, c_{bio}^{(l)} < 0 \right\}$$

This way, $v_{bo}^{(l)}$ may be rewritten as

$$v_{bo}^{(l)} = \sum_{i \in CP_{bo}^{(l)}} c_{bio}^{(l)} + \sum_{i \in CN_{bo}^{(l)}} c_{bio}^{(l)}$$

In other words, the sum may be divided in a positive contribution and a negative contribution. The set of weights 31, 32, 33 which, when adapted, reduce the output error of the neural network 200, may then be identified on the basis of whether some negative contributions needed to be positive, and/or whether some positive contributions needed to be negative, for example, whether the output of a layer would need to have a different sign, in order to reduce the output error of the neural network 200. For example, if the output of layer $l$, $v_{bo}^{(l)} < 0$, but $x_{bi}^{(l)}$ may be required to be positive in order to be aligned with the eventual label, we may need to modify some of the contributions corresponding to $CN_{bo}^{(l)}$, so with 'negative index', for example, render some of the contributions in $CN_{bo}^{(l)}$ positive, in order to make $v_{bo}^{(l)} > 0$. Similarly, if the output of layer $l$, $v_{bo}^{(l)} > 0$, but $x_{bi}^{(l)}$ may be required to be negative, so, $x_{bi}^{(l)} < 0$, in order to be aligned with the eventual label, we may need to modify some of the contributions corresponding to $CP_{bo}^{(l)}$, so with 'positive index', for example, render some of the contributions in $CP_{bo}^{(l)}$ negative, in order to make $v_{bo}^{(l)} < 0$.

In the backward pass 202, weights 31, 32, 33 in the set of identified weights 31, 32, 33 may be adapted to reduce the output error of the neural network 200. The adapting of weights 31, 32, 33 in the set of identified weights 31, 32, 33 may comprise the performing of one or more of a flipping, a decreasing and/or an increasing of the weights 31, 32, 33. In the case of a binary weight network 200, a weight 31, 32, 33 may be flipped, e.g., from -1 to 1 or from 1 to -1. In the case of a ternary weight network 200, a weight 31, 32, 33 may be decreased, e.g., from 1 to 0 and/or from 0 to -1, or increased, e.g., from 0 to 1 and/or from -1 to 0. The decrease or increase may depend on the direction of the change and/or needed change, depending on the contributions.

Determining an optimal weight flip which may be consistent with as most samples 21, 22, 23, 24 in *D* or even *B* as possible may not always be possible. Furthermore, the combinatorial problem of identifying the set of weights which would need to be adapted may scale exponentially, concerning one or more of the following parameters: a number of iterations T, the number of network layers *L,* the dimensions $d_{l-1}$ and $d_l$, and the batch size *B*. In order to address this issue, a variable $\beta_{io}^{(l)}$ may be defined for each weight 31, 32, 33 $w_{io}^{(l)}$ in the layer 211, 212, 213. The variable $\beta_{io}^{(l)}$ may aggregate the number of indications from each sample 22, 23, 24 in the batch 241, 242, 243, 244 $X_b^{(l-1)}$ regarding whether this weight 31, 32, 33 would need to be adapted, based on the contributions $\{c_{bio}^{(l)}, b = 1, \dots, B\}$. This way, across a plurality of backward passes 202, for each identified weight 31, 32, 33, a number of occurrences, indicated by $\beta_{io}^{(l)}$, may be tracked that a respective weight 31, 32, 33 was identified to need to be adapted to reduce the output error of the neural network 200. The number of occurrences may be taken from each sample 21, 22, 23, 24 in a batch 241, 242, 243, 244. The precision of the matrix $[\beta_{io}^{(l)}]$ may depend on the batch size *B*, and may be proportional to $log_2(B)$.

At least two different methods may be used for performing this combinatorial optimization problem. The methods are discussed for the BWN case, wherein the adapting of the weights may comprise a weight flip:

1. *A Top-K Method.*

In this method, the top k$^{(l)}$ largest indications of $\beta_{io}^{(l)}$ may be chosen, which number may differ for each layer 211, 212, 213, and the corresponding weights 31, 32, 33 may be flipped, with a probability $p_{flip}$. This probability may be a given value, for example, set to 0.1, and/or may be chosen, heuristically or theoretically. This may mean that if

$$K^{(l)} = \{(i, o)|\beta_{io}^{(l)} \text{belongs to } k^{(l)} \text{ largest values}\}$$

may be defined, for all *(i, o)* $\in d_{l-1} \times d_l$:

$$w_{io}^{(l)} = -w_{io}^{(l)} \text{ if } (i, o) \in K^{(l)}, \text{with probability } p_{flip},$$
$$\text{else } w_{io}^{(l)}.$$

This means that in this method, a subset of the set of identified weights may be identified, which may comprise the identified weights of which the respective numbers of occurrences are higher than the numbers of occurrences of the identified weights not belonging to the subset: namely, the 'top-k'.

A scheduler may be designed to adjust k$^{(l)}$ based on a predefined function, ensuring that k$^{(l)}$ may not fall below a specified minimum value. The scheduler may be as follows:

 1. *Constant:* The top-k amount k$^{(l)}$ may be set to constant throughout the training, for example, kept at, e.g., 10% of the number of parameters;
 2. *Linear:* The top-k amount k$^{(l)}$ may linearly decay, for example, from, e.g., 10% of the number of parameters to, e.g., 0%;
 3. *Exponential:* The top-k amount k$^{(l)}$ may decay following the expression

$$N_{TopK}(t, W^{(l)}) = 0.1 \cdot \frac{N_{W^{(l)}}}{t}$$

where $N_{W^{(l)}}$ may be the number of weights 31, 32, 33 at layer 211, 212, 213 *l*.

2. *A Threshold Method.*

In this method, a threshold, which may be denoted by $\gamma^{(l)}$, may be chosen. The threshold value may differ for each layer 211, 212, 213. The weights 31, 32, 33 of which the corresponding number of indications $\beta_{io}^{(l)}$ may exceed the

threshold $\gamma^{(l)}$ may be flipped, with a probability $p_{flip}$. This probability may be a given value, e.g., set to 0.1, and/or may be chosen, heuristically or theoretically. This may mean that if

$$G^{(l)} = \{(i,o)|\beta_{io}^{(l)} \geq \gamma^{(l)}\}$$

may be defined, for all $(i, o) \in d_{l-1} \times d_l$:

$$w_{io}^{(l)} = -w_{io}^{(l)} \text{ if } (i,o) \in G^{(l)}, \text{ with probability } p_{flip},$$
$$\text{else } w_{io}^{(l)}.$$

This means that in this method, a subset of the set of identified weights may be identified, which may comprise the identified weights of which the respective numbers of occurrences exceed a given threshold.

Another option for a method may be, that weights 31, 32, 33 in the set of identified weights 31, 32, 33 may be adapted using a probability which is proportional to the tracked numbers of occurrences. In other words, flip probabilities $p_{flip,io}^{(l)} \propto \beta_{io}^{(l)}$ may be used for adapting weights 31, 32, 33 in the set of identified weights 31, 32, 33.

It may be noted that the variables $\{k^{(l)}, l = 1, \ldots, L\}$ and/or $\{\gamma^{(l)}, l = 1, \ldots, L\}$ may be used, e.g., in a later stage, for, e.g., further optimizations or scheduling purposes. This may be done as in optimizers, as, e.g., ADAM or Momentum.

During the backward pass 202, a backward activation pass 211, 222 may be additionally performed on a backward propagated error 41, 42 of each layer 211, 212, 213. Inspired by the backpropagation update rules as used in existing techniques as discussed above, specifically as in the known $\delta$-rule backpropagation, heuristics of the same principle may be used, with a slight adaption of the discretization of the backpropagation errors 41, 42 $\delta^{(l)}$ when doing the backward pass 202. In addition, similarly to the error in the output layer 213, $\delta^{(l)}$ may serve as a surrogate signal for the inner errors. The error in the inner weights 31, 32, 33 may therefore be determined by the $\delta^{(l)}$ signal. The backward activation pass 211, 222 may be based on an activation function, a backward propagated error 41, 42 of a previous layer 211, 212, 213, and/or the weights 31, 32, 33 of the previous layer 211, 212, 213. The following heuristics for the backward pass 211, 222 may then be obtained:

$$\delta^{(l-1)} = \sigma_b^{(l)}(\delta^{(l)} \cdot W^{l,T})$$

wherein the back-propagated error $\delta^{(l-1)} \in \mathbb{R}^{d_{l-1} \times B} \times \mathbb{R}^{B \times d_l}$. Furthermore, $\sigma_b^{(l)}$ may be a backward activation function. The backward activation function may be different from the forward activation function $\sigma^{(l)}$. The backward activation function may be one of a sign activation function, a ReLU activation function, and a Leaky ReLU activation function. The backward activation may keep the $\delta$ signal representation with low precision. An algorithm version of the above discussed Top-K method according to the invention may be summarized below:

*A Top-K Gradient-Free Neural Network Training Algorithm*

**Input:**

- Data with labels: $D = (x_n, y_n) \in \mathbb{R}^{d_0}, \mathbb{R}^{d_L}$, $n = 1, \ldots, N,$
- Number of training iterations $T$
- Batch size $B$
- Flip probability $p_{flip}$
- Layer sizes $d_0, \ldots, d_L$
- Schedulers $SC^{(l)}(t): \mathbb{N} \to \mathbb{N}$ which map timesteps to $k^{(l)}$
- Forward activation $\sigma_f(\cdot)$ where $\sigma_f \in \{\text{sign}(\cdot), \text{ReLU}(\cdot), \text{LeakyReLU}(\cdot)\}$
- Backward activation $\sigma_b(\cdot)$ where $\sigma_b \in \{\text{sign}(\cdot), \text{ReLU}(\cdot)\}$

**Output:** Trained Weights $W^{(1)}, W^{(2)}, ..., W^{(L)}$

Randomly initialize $W^{(l)} \in \{-1,1\}^{d_{l-1} \times d_l}$ for all $l = 1, ..., L$

**for** $t = 1, ..., T$ **do**

$\{k^{(l)}\} \leftarrow SC^{(l)}(t)$ for all $l = 1, ..., L$

Sample a batch $\left\{X_b^{(0)}, y_b\right\} \in D$ of size $B$

**for** $l = 1, ..., L$ **do** (forward pass)

Compute $C^{(l)}$ (matrix multiplication)

$v^{(l)} \leftarrow \sum_{i=1}^{d_{l-1}} c_{bio}^{(l)}$

$X_b^{(l)} \leftarrow \sigma_f(v^{(l)})$

**end for**

$e_b = y_b - X_b^{(L)}, \quad \mathcal{L}_b = Tr(e_b^\top \cdot e_b)$ (compute output error)

$\delta^{(L)} \leftarrow e_b$ (compute output $\delta$)

**for** $l = 1, ..., L$ **do** (backward pass)

**for** $b = 1, ..., B$ **do** (compute which samples contribute towards errors)

**if** $\delta_{bo}^{(l)} c_{bio} < 0$ **then**

$\beta_{io}^{(l)} \leftarrow \beta_{io}^{(l)} + 1$ (summing up the contributions)

**end if**

**end for**

$K^{(l)} \leftarrow \{(i, o) | \beta_{io}^{(l)} \text{belongs to topk}(k^{(l)})\}$

**for** $(i, o)$ **in** $K^{(l)}$ **do**

$r \sim U[0,1]$ (randomly flip the weight)

**if** $r > p_{flip}$ **then**

$w_{io}^{(l)} \leftarrow -w_{io}^{(l)}$

**end if**

**end for**

$\delta^{(l-1)} \leftarrow \sigma_b^{(l)}(\delta^{(l)} \cdot W^{l,\top})$ (preparing $\delta(\cdot)$ for the previous layer)

**end for**

**end for**

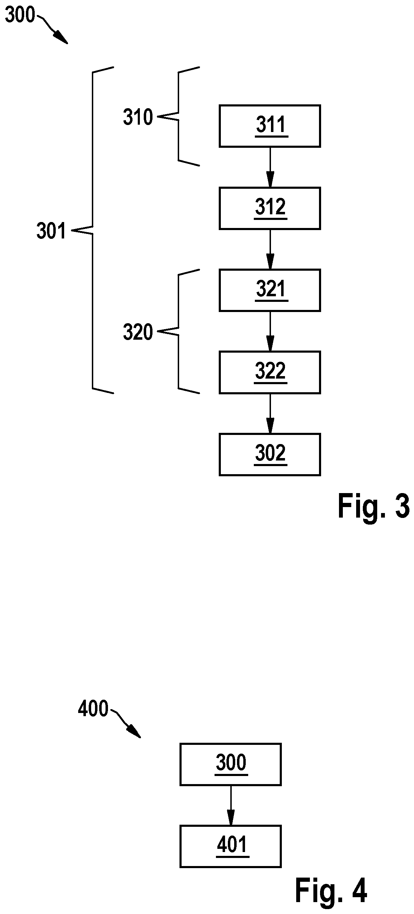

**Fig. 3** schematically shows an embodiment of a method 300 for training a neural network 200 on an edge device 110. Method 300 may be a computer-implemented method. Method 300 may be a method 300 for training a neural network 200 on an edge device 110 of a communications network 100, 100' to perform classification. Neural network 200 may comprise one or more layers 211, 212, 213, each of the one or more layers 211, 212, 213 comprising a plurality of weights 31, 32, 33, wherein the weights 31, 32, 33 are binary or ternary weights 31, 32, 33. In step 301, method 300 may comprise iteratively training the weights 31, 32, 33 on a training data set 231, the training data set 231 comprising a plurality of input samples 21 and ground truth labels 20 for the plurality of input samples 21. Training step 301 may comprise, for an input sample 21, during a forward pass 310, a step 311 of constructing contribution tensors for each layer 211, 212, 213, the contribution tensors being indicative of contributions of the plurality of weights 31, 32, 33 of a respective layer 211, 212, 213 towards an output of the layer 211, 212, 213. After forward pass 310, training step 301 may comprise a step 312 of computing an output error of the neural network 200 by comparing the output of a final layer 213 of the neural network 200 to a ground truth label 20 for the input sample 21. Training step 301 may comprise, during a backward pass 320, for each layer 211, 212, 213, a step 321 of, based on layer outputs obtained during the forward pass 201, 330 and the contribution tensors, identifying a set of weights 31, 32, 33 which, when adapted, reduce the output error of the neural network 200. Training step 301 may further comprise, during backward pass 320, a step 322 of adapting weights 31, 32, 33 in the set of identified weights 31, 32, 33 to reduce the output error. Method 300 may further comprise a step 302 of providing the trained neural network 200 for deployment on the edge device 110.

**Fig. 4** schematically shows an embodiment of a method 400 for using a neural network 200 on an edge device 110. 13. Method 400 may be a computer-implemented method. Method 400 may comprise a step of performing method 300. Method 400 may further comprise a step 401 of using a neural network 200 on an edge device 110 of a communications network 100, 100' to perform classification, wherein the neural network 200 has been trained using method 300.

Many ways of executing method 300, 400 are possible, as will be apparent to a person skilled in the art. For example, the order of the steps can be performed in the shown order, but the order of the steps can be varied, or some steps may be executed in parallel. Moreover, in between steps other method steps may be inserted. The inserted steps may represent refinements of method 300, 400 such as described herein or may be unrelated to method 300, 400. For example, some steps may be executed, at least partially, in parallel. Moreover, a given step may not have finished completely before a next step is started.

Embodiments of method 300, 400 may be executed using software, which comprises instructions for causing a processor system to perform method 300, 400. Software may only include those steps taken by a particular sub-entity of the system. The software may be stored in a suitable storage medium, such as a hard disk, a memory, an optical disc, etc. The software may be sent as a signal along a wire, or wireless, or using a data network, e.g., the Internet. The software may be made available for download and/or for remote usage on a server. Embodiments of method 300, 400 may be executed using a bitstream arranged to configure programmable logic, e.g., a field-programmable gate array, to perform method 300, 400.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

Method 300, 400 may be a computer-implemented method. For example, accessing and sharing the training data, and/or receiving other input data may be done using a communication interface, e.g., an electronic interface, a network interface, a memory interface, etc. For example, storing or retrieving training parameters may be done from an electronic storage, e.g., a memory, a hard drive, etc. For example, adjusting stored parameters may be done using an electronic computing device, e.g., a computer. Any of the method(s) 300, 400 as described in this specification may be implemented on a computer as a computer implemented method 300, 400, as dedicated hardware, or as a combination of both.

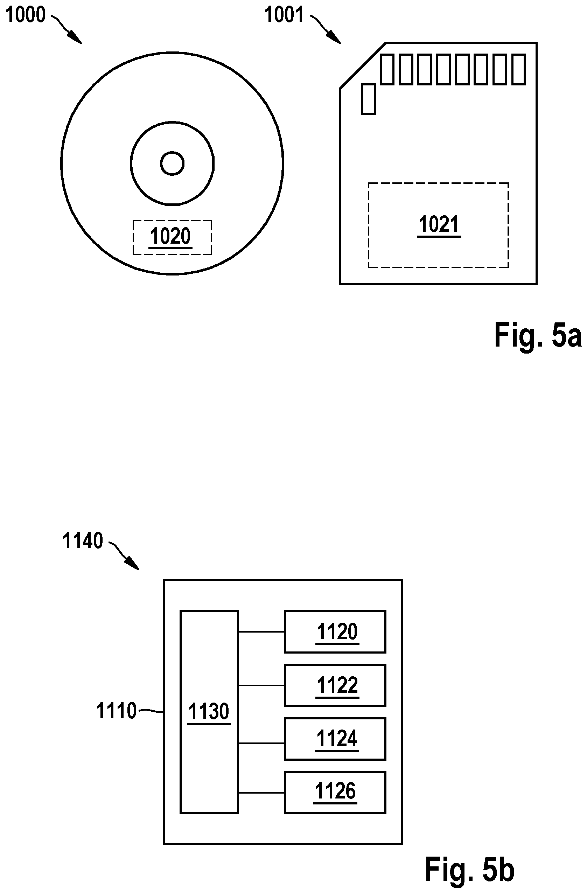

**Fig. 5a** schematically shows a computer readable medium 1000 having a writable part 1010, and a computer readable medium 1001 also having a writable part. Computer readable medium 1000 is shown in the form of an optically readable medium. Computer readable medium 1001 is shown in the form of an electronic memory, in this case a memory card. Computer readable medium 1000 and 1001 may store data 1020 wherein the data may indicate instructions, which when executed by a processor system, cause a processor system to perform an embodiment of method 300, 400. Data 1020 may comprise a computer program 1020 according to an embodiment, The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 may comprises instructions for causing a processor system to perform an embodiment of method 300, 400.

**Fig. 5b** shows a processor system 1140 which may comprise or represent a system configured to perform a training and/or using method 300, 400 as described elsewhere in this specification. The processor system 1140 may comprise an edge device 110 according to an embodiment, wherein the edge device 110 is configured to perform a training and/or using method as described elsewhere in this specification. The processor system 1140 may comprise one or more subsystems or components 1110. For example, a processing subsystem 1120 may be provided for executing computer program components to perform a method 300, 400 as described elsewhere in this specification. A memory 1122 may be provided for storing programming code, data, etc. A communication subsystem 1126, such as a network interface, may allow communication with other entities. In some examples, a dedicated integrated circuit 1124 may be provided for performing part or all of the processing related to a method as described elsewhere in this specification. The processing subsystem 1120, the memory 1122, the dedicated IC 1124 and the communication subsystem 1126 may be connected to each other via an interconnect 1130, say a bus. While system 1140 is shown as including one of each described component, the various components may be duplicated in various embodiments. For example, the processing subsystem 1120 may include multiple microprocessors that are configured to independently execute a method as described in this specification or are configured to perform steps or subroutines of a method described herein such that the multiple processors cooperate to achieve the functionality described in this specification. Further, where the system 1140 may be implemented in a cloud computing system, a cloud server and/or a compute farm, the various hardware components may belong to separate physical systems. For example, the processing subsystem 1120 may include a first processor in a first server and a second processor in a second server.

Processor system 1140 may be configured to train a neural network 200; quantizing, discretizing, testing, verifying and/or validating a further neural network, and/or obtaining, receiving and/or generating training data for a training data set 231 for such a training. Neural network 200 may be trained on processor system 1140 to perform classification. Processor system 1140 may receive training data as input from another device. Processor system 1140 may be part of a communications network 100. In the communications network, there may be a data flow. Neural network 200 may be trained, e.g., to improve data routing in the data flow. As a result of the training of neural network 200, data in a data flow of a communications network 100 may be adapted. Processor system 1140 may be configured to receive, send, transmit, route, process, monitor, filter, and/or store data of the data flow. Processor system 1140 may comprise one or more sensors, which may determine measurements of the environment in the form of sensor signals, which may be given by, for example, digital images, for example, medical images, video, radar, LiDAR, ultrasonic, motion thermal images, or audio signals. The image data may be obtained from sensor data. The data may be used in routing, transmission and/or processing of data in a communications network 100. Processor system 1140 may generate a classification of the data as an output. The output may be used to control, e.g., an actuator. For example, processor system 1140 may comprise an edge device 110, which may, for example, comprise an autonomous vehicle, which comprises a sensor which detects the presence of objects in the environment of the vehicle. An classification task may comprise classifying the data from the sensor, detecting the presence of objects in the sensor data and/or performing a semantic segmentation on the data, e.g., regarding traffic signs, road surfaces, pedestrians and vehicles. On the basis of the classification, a decision-making process may be performed. The classification may be a classification of transmitted data which the processor system 1140 may have transmitted through a communications network, and/or a classification of routed data which the processor system 1140 may have routed through a communications network. Other classification tasks may comprise detecting anomalies in technical systems, computing control signals for controlling technical systems, e.g., computer-controlled machines as robotic systems, vehicles, domestic appliances like a washing machine, power tools, manufacturing machines, personal assistants, or access control systems; or systems for conveying information, e.g., surveillance systems or medical systems as medical imaging systems. In applications of the trained neural network 200, for example, in robotics and in automated and/or autonomous driving, using data comprising images, radar data, etc., training methods 300 and subsequent inference methods 400 may enable an optimal performance of the trained neural network 200 on the edge device 110 on which it may be trained and/or used, in training and/or inference phases, as described above. The optimal performance of the neural network 200 may be with respect to considered technical limitations on the edge device 110, such as compute power and/or energy resources.

Processor system 1140 may be configured to generate test data, verification data and/or validation data to check whether a trained neural network 200 may be safely trained, used and/or operated on processor system 1140. Processor system 1140 may be configured to generate test data, verification data and/or validation data to check whether a trained neural network 200 may be safely trained on a device, wherein the device may be internal or external to processor system 1140. The device may be an edge device 110. Processor system 1140 may be configured to determine whether there is enough storage, compute and/or power resources on the device for training and/or using neural network 200. After being trained, e.g., according to a method 300 as described elsewhere in this specification, neural network 200 may be put to deployment according to an inference or using method 400 according to an embodiment as described in this specification. Processor system 1140 may be both configured to train neural network 200 and use the trained neural network 200. Processor system 1140 may also generate a training dataset 231 and/or input samples 21, for training a further neural network 200. The system 1140 may also train the further neural network 200 as well.

It is noted that a presently disclosed method 300 for training a neural network on an edge device of a communications network to perform classification and a presently disclosed method 400 for using a neural network on an edge device of a communications network to perform classification may be part of the same computer-implemented method 300, 400.

Examples, embodiments or optional features, whether indicated as non-limiting or not, are not to be understood as limiting the invention as claimed.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

## Claims

1. A computer-implemented method (300) for training a neural network (200) on an edge device (110) of a communications network (100, 100') to perform classification, the neural network (200) comprising one or more layers (211, 212, 213), each of the one or more layers (211, 212, 213) comprising a plurality of weights (31, 32, 33), wherein the weights (31, 32, 33) are binary or ternary weights (31, 32, 33), wherein the method (300) comprises:

   - iteratively training (301) the weights (31, 32, 33) on a training data set (231), the training data set (231) comprising a plurality of input samples (21) and ground truth labels (20) for the plurality of input samples (21), the training (301) comprising, for an input sample (21):

      - during a forward pass (201, 310), constructing (311) contribution tensors for each layer (211, 212, 213), the contribution tensors being indicative of contributions of the plurality of weights (31, 32, 33) of a respective layer (211, 212, 213) towards an output of the layer (211, 212, 213),
      - after the forward pass (201, 310), computing (312) an output error of the neural network (200) by comparing the output of a final layer (213) of the neural network (200) to a ground truth label (20) for the input sample (21),
      - during a backward pass (202, 320), for each layer (211, 212, 213):

         - based on layer outputs obtained during the forward pass (201, 330) and the contribution tensors, identifying (321) a set of weights (31, 32, 33) which, when adapted, reduce the output error of the neural network (200), and
         - adapting (322) weights (31, 32, 33) in the set of identified weights (31, 32, 33) to reduce the output error, and

   - providing (302) the trained neural network (200) for deployment on the edge device (110).

2. A method (300) as in claim 1, further comprising, for each layer (211, 212, 213):

   - constructing (311) the contribution tensor based on the plurality of weights (31, 32, 33) of the layer (211, 212, 213) and an output of a previous layer (211, 212, 213).

3. A method (300) as in claim 2, wherein constructing (311) the contribution tensor comprises computing the contribution tensor by a matrix multiplication of a weight matrix comprising the plurality of weights (31, 32, 33) of the layer (211, 212, 213) and a further matrix comprising the output of the previous layer (211, 212, 213).

4. A method (300) as in any of the preceding claims, wherein the adapting (322) of weights (31, 32, 33) in the set of identified weights (31, 32, 33) comprises performing one or more of a flipping, a decreasing and/or an increasing of the weights (31, 32, 33).

5. A method (300) as in any of the preceding claims, further comprising:

   - across a plurality of backward passes (202, 320), for each identified weight (31, 32, 33), tracking a number of occurrences that a respective weight (31, 32, 33) was identified to need to be adapted to reduce the output error.

6. A method (300) as in claim 5, further comprising, during the backward pass (202, 320):

   - adapting weights (31, 32, 33) in the set of identified weights (31, 32, 33) using a probability which is proportional to the tracked numbers of occurrences.

7. A method (300) as in claim 5, further comprising, during the backward pass (202, 320):

   - identifying a subset of the set of identified weights (31, 32, 33), the subset comprising the identified weights (31, 32, 33) of which the respective numbers of occurrences are higher than the numbers of occurrences of the identified weights (31, 32, 33) not belonging to the subset, and
   - adapting (322) the weights (31, 32, 33) in the subset using a given probability.

8. A method (300) as in claim 5, further comprising, during the backward pass (202, 320):

   - identifying a subset of the set of identified weights (31, 32, 33), the subset comprising the identified weights (31, 32, 33) of which the respective numbers of occurrences exceed a given threshold, and
   - adapting (322) the weights in the subset using a given probability.

9. A method (300) as in claims 7 or 8, further comprising:

   - using the size of the subset of the set of identified weights and/or the threshold for the numbers of occurrences as variables to perform optimization and/or scheduling.

10. A method (300) as in any of the preceding claims, further comprising

    - during the backward pass (202, 320), additionally performing a backward activation pass (221, 222) on a backward propagated error (41, 42) of each layer (211, 212, 213) based on an activation function, a backward propagated error (41, 42) of a previous layer (211, 212, 213), and/or the weights (31, 32, 33) of the previous layer (211, 212, 213).

11. A method (300) as in any of the preceding claims, further comprising determining the weights (31, 32, 33) by quantizing and/or discretizing a further neural network comprising further weights, the further weights comprising non-binary or non-ternary weights.

12. A method (300) as in any of the preceding claims, wherein performing the forward pass (201, 310) and/or the backward pass (202, 320) comprises using one or more activation functions, such as a sign activation function, a ReLU activation function, a LeakyReLU activation function, or any combination thereof.

13. A computer-implemented method (400) for using (401) a neural network (200) on an edge device (110) of a communications network (100, 100') to perform classification, wherein the neural network (200) has been trained using a method (300) according to any of the preceding claims.

14. A transitory or non-transitory computer-readable medium (1000) comprising data (1020, 1021) representing a computer program, the computer program comprising instructions for causing a processor system (1140) to perform the method (300, 400) according to any one of claims 1 to 13.

15. A processor system (1140) comprising a memory (1122) and one or more processors (1120), wherein the memory (1122) comprises instructions for causing the one or more processors (1120) to perform the method (300, 400) according to any one of claims 1 to 13.

**Amended claims in accordance with Rule 137(2) EPC.**

1. A computer-implemented method (300) for training a neural network (200) to perform classification of sensor data,

   the neural network (200) comprising one or more layers (211, 212, 213), each of the one or more layers (211, 212, 213) comprising a plurality of weights (31, 32, 33),
   wherein the weights (31, 32, 33) are binary or ternary weights (31, 32, 33), wherein the method (300) comprises:

- iteratively training (301) the weights (31, 32, 33) on a training data set (231), the training data set (231) comprising a plurality of input samples (21) and ground truth labels (20) for the plurality of input samples (21), the training (301) comprising, for an input sample (21):
- during a forward pass (201, 310), constructing (311) contribution tensors for each layer (211, 212, 213), the contribution tensors being indicative of contributions of the plurality of weights (31, 32, 33) of a respective layer (211, 212, 213) towards an output of the layer (211, 212, 213), wherein constructing (311) the contribution tensor comprises computing the contribution tensor by a matrix multiplication of a weight matrix comprising the plurality of weights (31, 32, 33) of the layer (211, 212, 213) and a further matrix comprising the output of the previous layer (211, 212, 213),
- after the forward pass (201, 310), computing (312) an output error of the neural network (200) by comparing the output of a final layer (213) of the neural network (200) to a ground truth label (20) for the input sample (21),
- during a backward pass (202, 320), for each layer (211, 212, 213):

  ▪ based on layer outputs obtained during the forward pass (201, 330) and the contribution tensors, identifying (321) a set of weights (31, 32, 33) which, when adapted, reduce the output error of the neural network (200), and
  ▪ adapting (322) weights (31, 32, 33) in the set of identified weights (31, 32, 33) to reduce the output error, and

  - providing (302) the trained neural network (200).

2. A method (300) as claim 1, wherein the adapting (322) of weights (31, 32, 33) in the set of identified weights (31, 32, 33) comprises performing one or more of a flipping, a decreasing and/or an increasing of the weights (31, 32, 33).

3. A method (300) as in any of the preceding claims, further comprising:

   - across a plurality of backward passes (202, 320), for each identified weight (31, 32, 33), tracking a number of occurrences that a respective weight (31, 32, 33) was identified to need to be adapted to reduce the output error.

4. A method (300) as in claim 3, further comprising, during the backward pass (202, 320):

   - adapting weights (31, 32, 33) in the set of identified weights (31, 32, 33) using a probability of a given value which is proportional to the tracked numbers of occurrences.

5. A method (300) as in claim 3, further comprising, during the backward pass (202, 320):

   - identifying a subset of the set of identified weights (31, 32, 33), the subset comprising the identified weights (31, 32, 33) of which the respective numbers of occurrences are higher than the numbers of occurrences of the identified weights (31, 32, 33) not belonging to the subset, and
   - adapting (322) the weights (31, 32, 33) in the subset using a given probability.

6. A method (300) as in claim 3, further comprising, during the backward pass (202, 320):

   - identifying a subset of the set of identified weights (31, 32, 33), the subset comprising the identified weights (31, 32, 33) of which the respective numbers of occurrences exceed a given threshold, and
   - adapting (322) the weights in the subset using a given probability.

7. A method (300) as in any of the preceding claims, further comprising

   - during the backward pass (202, 320), additionally performing a backward activation pass (221, 222) on a backward propagated error (41, 42) of each layer (211, 212, 213) based on an activation function, a backward propagated error (41, 42) of a previous layer (211, 212, 213), and/or the weights (31, 32, 33) of the previous layer (211, 212, 213).

8. A method (300) as in any of the preceding claims, wherein performing the forward pass (201, 310) and/or the backward pass (202, 320) comprises using one or more activation functions, such as a sign activation function, a ReLU activation function, a LeakyReLU activation function, or any combination thereof.

9. A computer-implemented method (400) for using (401) a neural network (200) to perform classification, wherein the neural network (200) has been trained using a method (300) according to any of the preceding claims.

10. A transitory or non-transitory computer-readable medium (1000) comprising data (1020, 1021) representing a computer program, the computer program comprising instructions for causing a processor system (1140) to perform the method (300, 400) according to any one of claims 1 to 11.

11. A processor system (1140) comprising a memory (1122) and one or more processors (1120), wherein the memory (1122) comprises instructions for causing the one or more processors (1120) to perform the method (300, 400) according to any one of claims 1 to 9.

**Fig. 1a**

**Fig. 1b**

200

231

201

| 21 | 20 |

| 21 | 241 |

| 31 | 211 |

| 42 | 222 |

| 22 | 242 |

| 32 | 212 |

⋮　　　　　　　⋮

| 23 | 243 |

| 41 | 221 |

| 33 | 213 |

| 24 | 244 |

202

Fig. 2

300

310 {
| 311 |
↓
| 312 |

301 {

320 {
| 321 |
↓
| 322 |

↓
| 302 |

**Fig. 3**

400

| 300 |
↓
| 401 |

**Fig. 4**

1000

1001

1020

1021

**Fig. 5a**

1140

1110

1130

1120

1122

1124

1126

**Fig. 5b**

**EUROPEAN SEARCH REPORT**

Application Number

EP 24 20 3539

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZIFENG WANG ET AL: "SparCL: Sparse Continual Learning on the Edge", ARXIV.ORG, CORNELL UNIVERSITY LIBRARY, 201 OLIN LIBRARY CORNELL UNIVERSITY ITHACA, NY 14853, 20 September 2022 (2022-09-20), XP091323677, * figure 2 * * Section 1 * * Section 2.1 * * Section 4.1 * ----- | 1-15 | INV. G06N3/08 G06N3/0495 G06N3/09 ADD. G06N3/082 G06N3/084 |
| X | JI LIN ET AL: "On-Device Training Under 256KB Memory", ARXIV.ORG, CORNELL UNIVERSITY LIBRARY, 201 OLIN LIBRARY CORNELL UNIVERSITY ITHACA, NY 14853, 10 November 2022 (2022-11-10), XP091365041, * Sections 1-2 * ----- | 1-15 | |
| X | YOUNG D KWON ET AL: "TinyTrain: Deep Neural Network Training at the Extreme Edge", ARXIV.ORG, CORNELL UNIVERSITY LIBRARY, 201 OLIN LIBRARY CORNELL UNIVERSITY ITHACA, NY 14853, 19 July 2023 (2023-07-19), XP091567138, Section 2; * abstract * ----- | 1-15 | TECHNICAL FIELDS SEARCHED (IPC) G06N |

The present search report has been drawn up for all claims

| Place of search | Date of completion of the search | Examiner |
|---|---|---|
| Munich | 19 February 2025 | Maghroum, Walid |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WANG et al.** *BitNet: Scaling 1-bit Transformers for Large Language Models*, 2023, https://arxiv.org/abs/2310.11453
- **MA et al.** *The Era of 1-bit LLMs: All Large Language Models are in 1.58 Bits*, 2024, https://arxiv.org/abs/2402.17764
- **HAN et al.** *Deep Compression: Compressing Deep Neural Networks with Pruning, Trained Quantization and Huffman Coding*, 2015, https://arxiv.org/abs/1510.00149
- **IANDOLA et al.** *SqueezeNet: AlexNet-level accuracy with 50x fewer parameters and <0.5MB model size*, 2016, https://arxiv.org/abs/1602.07360
- **HAN et al.** *Learning both Weights and Connections for Efficient Neural Networks*, 2015, https://arxiv.org/abs/1506.02626
- **LIN et al.** *Neural Networks with Few Multiplications*, 2016, https://arxiv.org/abs/1510.03009
- **COURBARIAUX et al.** *BinaryConnect: Training Deep Neural Networks with binary weights during propagations*, 2016, https://arxiv.org/abs/1511.00363
- **LI et al.** *Ternary Weight Networks*, 2022, https://arxiv.org/abs/1605.04711
- **RASTEGARI et al.** *XNOR-Net: ImageNet Classification Using Binary Convolutional Neural Networks*, 2016, https://arxiv.org/abs/1603.05279
- **DENG et al.** *GXNOR-Net: Training deep neural networks with ternary weights and activations without full-precision memory under a unified discretization framework*, 2018, https://arxiv.org/abs/1705.09283